# EUROPEAN PATENT SPECIFICATION

(11) **EP 1 531 668 B1**
(45) Date of publication and mention of the grant of the patent: **17.06.2009**
(21) Application number: 03792469.3
(22) Date of filing: 12.08.2003
(51) Int. Cl.: A01N 25/28

(54) **MICROENCAPSULATED AGROCHEMICAL COMPOSITION**
MIKROVERKAPSELTE AGROCHEMISCHE ZUSAMMENSETZUNG
COMPOSITION AGROCHIMIQUE MICROENCAPSULEE

(30) Priority: 22.08.2002 GB 0219611
(43) Date of publication of application: 25.05.2005
(73) Proprietor: Syngenta Limited, Guildford Surrey GU2 7YH (GB)
(72) Inventor: BELL, Gordon, Alastair, Syngenta Limited, Bracknell, Berkshire RG42 6EY (GB)
(74) Representative: Osborn, Martin Keith
(86) International application number: PCT/GB2003/003507
(87) International publication number: WO 2004/017734

(56) References cited:
- WO-A-95/13698
- WO-A-03/022048
- GB-A- 1 513 614
- US-A- 4 936 901
- DATABASE CA [Online] CHEMICAL ABSTRACTS SERVICE, COLUMBUS, OHIO, US; OOTSUBO, TOSHIRO ET AL: "Microcapsules containing carbamate insecticides and nonarom. esters" retrieved from STN Database accession no. 121:295141 XP002262589 & JP 06 256116 A (SUMITOMO CHEMICAL CO, JAPAN) 13 September 1994 (1994-09-13)

## Description

This invention relates to a composition and in particular to a microencapsulated agrochemical composition containing an adjuvant.

It is well known that active ingredients such as agrochemicals may be formulated such that the active composition is contained within a microcapsule shell wall. Frequently the microcapsule shell wall is designed to provide controlled release as the active composition diffuses slowly through the wall or the wall is slowly degraded. There are also applications however such as those described in WO 97/44125 in which the microcapsule provides temporary protection only and is degraded relatively rapidly as soon as the composition is put into use.

Microencapsulated compositions frequently incorporate non-biologically active surface-active polymers to assist in the suspension of the microcapsules, for example in an aqueous dispersion. Numerous surfactants and adjuvants are known which enhance the bioperformance of pharmaceuticals and agrochemicals. Care must be taken however in the use of bioperformance enhancing surfactants in microencapsulated compositions since such surfactants often locate themselves at the oil/water interface during the encapsulation process and tend to interfere with the wall-forming reaction.

According to the present invention there is provided a microencapsulated agrochemical composition as described in claim 1 comprising an aqueous dispersion of microcapsules having material encapsulated therein wherein the material encapsulated within the microcapsules comprises (a) an agrochemical (b) a water-insoluble, bioperformance-enhancing adjuvant for said agrochemical wherein said adjuvant has little or no surfactant properties and (c) a water-immiscible solvent in which both the agrochemical and adjuvant are soluble.

If the agrochemical is soluble in the adjuvant, the adjuvant may be used as both adjuvant and solvent (i.e. materials (b) and (c) may be one and the same). In general however it will be more convenient to use a separate water-immiscible solvent in which both the agrochemical and adjuvant are soluble.

The adjuvant should not interfere significantly with the microencapsulation wall-forming process and for this reason has little or no surfactant properties. Typically, the adjuvant will have a Hydrophile / Lipophile balance of 9 or less. Some of the materials that come into this category will reduce interfacial tension however they would not be effective as dispersants for oil in water emulsions. It is to be understood that the term "water-insoluble" liquid adjuvant as used herein should not be taken as indicating that the solubility of the adjuvant in water is immeasurably small but rather that there is no significant loss of the adjuvant into an aqueous phase. Typically the solubility of the adjuvant in water will be less than 0.1% by weight and preferably less than 0.01% by weight. Mixtures of liquid water-insoluble adjuvants may also be used.

Water-insoluble liquid adjuvants (oils) are normally difficult to incorporate in aqueous agrochemical formulations, particularly if the composition is a concentrate that is designed to be diluted prior to use. Water-insoluble liquid adjuvants, even when they can be utilised, therefore tend to be added as a tank mix by the farmer rather than in the more convenient form of a "built-in" concentrate. Furthermore even adjuvant compositions designed to be added as a tank mix tend to be a complex mixture having components such as surfactants whose purpose is to increase the compatibility of the primary liquid adjuvant.

The water-insoluble adjuvants used in the compositions according to the invention have the formula

R-X (I)

and alkoxylated derivatives thereof wherein R is a branched or straight chain alkyl or akenyl group having from 12 to 20 carbon atoms and X is hydroxy, amine (primary, secondary, tertiary or quaternary), amine oxide, phosphonate, phosphate, phosphate ester, thiol, sulphoxide, sulphone, sulphonate, sulphate, heterocyclic moiety (imidazoline, morpholine, pyrrolidone, piperazine etc), glucoside, polyglucoside or alkylated gucoside, sarcosinate, betaine (including sulpho and phospho betaines), amidoamines, carboxylic acid, amide, ester and combinations of these groups such as ether sulphates, amines, carboxylates and phosphonates. The group -X may be alkoxylated provided this does not raise the HLB above 9. The alkoxy group will generally contain from 2 to 4 carbon atoms. In particular samples with an average of 1 to 2 ethoxy groups may generally be incorporated without imparting significant surfactant properties. Propoxy groups or butyloxy groups generally do not have the effect of imparting surfactant properties and it is possible therefore to introduce a greater number of such groups provided that the adjuvant remains a liquid. Typically there may be introduced form 1 to 20 such groups.

R is preferably a branched or straight chain alkyl or alkenyl group containing from 16 to 20 carbon atoms. When R is an alkenyl group it may have one or more double bonds which may be in either cis or trans configuration(s). Preferably R₁ has from 1 to 3 double bonds. It is generally preferred that the double bond(s) are in the cis configuration. It is especially preferred that R₁ is a C₁₈ branched chain alkyl or C₁ alkenyl group for example oleyl or isostearyl. In all the above, R may be optionally alkoxylated.

Especially preferred adjuvants are oleyl alcohol or stearyl alcohol, optionally alkoxlated with from 0 to 2 ethoxy groups; and oleic acid or stearic acid and C1 to C4 alkyl esters thereof.

As examples of adjuvants suitable for use in the composition of the present invention there may be mentioned:-
"Brij "92, oleyl alcohol ethoxylate with an average of 2 moles of ethoxylate
"Adol" 320, oleyl alcohol
"Priolene" 6910, oleic acid
"Turbocharge", proprietary blend of oils and short chain ethoxylates
"Merge", proprietary blend of oils and short chain ethoxylates
"Dash", proprietary blend of oils and short chain ethoxylates
"Silwet" L77, ethoxylated silicone
"Ethomeen" S12, Short chain ethoxylated fatty amine
"Hystrene" 9018, Stearic acid.

Those skilled in the art will be able to select the adjuvant class that is most suitable for a given active ingredient. For example adjuvants particularly suitable for enhancing the bioperformance of lipophilic agrochemicals include the commercial blends "Turbocharge", "Dash", LI 700 and "Merge" and single component adjuvants such as methyl oleate, oleyl alcohol and "Brij" 92.

Also suitable are novel adjuvants disclosed in our co-pending International application WO 03/022048A1. Thus suitable adjuvants may have the formula

R₁-(CO)ₘ-O-[-R₂O-]ₙ-R₃ (II)

wherein R₁ is a C₁₆ to C₂₀ straight or branched chain alkyl or alkenyl group, R₂ is ethyl or isopropyl, n is from 8 to 30 and m is 0 or 1 and when R₂ is ethyl, R₃ is a C₁ to C₇ alkyl group and when R₂ is isopropyl, R₃ is hydrogen or a C₁ to C₇ alkyl group.

The process of the present invention is particularly suitable for lipohilic agrochemicals which dissolve most readily in the oil phase.

Examples of suitable lipophilic agrochemicals include:
(a) herbicides such as fluzifop, mesotrione, fomesafen, tralkoxydim, napropamide, amitraz, propanil, cyprodanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron and metoxuron;
(b) fungicides such as azoxystrobin, trifloxystrobin, kresoxim methyl, famoxadone, metominostrobin and picoxystrobin, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin, prothioconazole , 8-(2,6-diethyl-4-methyl-phenyl)tetrahydropyrazolo[1,2-d][1,4,5]oxadiazepine-7,9-dione and 2,2,-dimethyl-propionic acid-8-(2,6-diethyl-4-methyl-phenyl)-9-oxo-1,2,4,5-tetrahydro-9H-pyrazolo[1,2-d][1,4,5]oxadiazepine-7-yl ester; and
(c) insecticides such as abamectin, acephate, acetamiprid, acrinathrin, alanycarb, aldicarb, allethrin, alpha-cypermethrin, amitraz, asulam, azadirachtin , azamethiphos, azinphos-ethyl, azinphos-methyl, bendiocarb, benfuracarb, bensultap, beta-cyfluthrin, beta-cypermethrin, bifenthrin, bioallethrin, bioresmethrin, bistrifluron, borax, buprofezin, butoxycarboxim, cadusafos, carbaryl , carbofuran, chlorpropham, clothianidin, cyfluthrin, cyhalothrin, cyprmethrin, deltamethrin, diethofencarb, diflubenzuron, dinotefuran, emamectin, endosulfan, fenoxycarb, fenthion, fenvalerate, fipronil, halfenprox, heptachlor, hydramethylnon, imidacloprid, imiprothrin, isoprocarb, lambda cyhalothrin, methamidophos, methiocarb, methomyl, nitenpyram, omethoate, permethrin, pirimicarb, pirimiphos methyl, propoxur, tebufenozide, thiamethoxam, thiodicarb, triflumoron, and xylylcarb.

It is an advantage of the compositions of the present invention however that the concentration of the adjuvant is not limited by compatibility or stability problems provided a suitable solvent is selected in which both the adjuvant and agrochemical both have the desired solubility. In contrast adjuvants for use in the present invention are difficult or impossibly to "built-in" to conventional aqueous formulations of the agrochemical. The proportion of adjuvant to active ingredient can thus mirror that found to be most useful in tank-mix application even if this content of adjuvant would be unstable when "built-in" using conventional techniques. The ratio of adjuvant to active ingredient ranges from 1:50 and 200:1 and preferably from 1:5 to 20:1

A wide variety of materials suitable for use as the water-immiscible solvent will occur to those skilled in the art. Examples include diesel oil, isoparaffin, aromatic solvents, particularly alkyl substituted benzenes such as xylene or propyl benzene fractions, and mixed naphthalene and alkyl naphthalene fractions; mineral oils, white oil, castor oil, sunflower oil, kerosene, dialkyl amides of fatty acids, particularly the dimethyl amides of fatty acids such as caprylic acid; chlorinated aliphatic and aromatic hydrocarbons such as 1,1,1-trichloroethane and chlorobenzene, esters of glycol derivatives, such as the acetate of the n-butyl, ethyl, or methyl ether of diethylene glycol, the acetate of the methyl ether of dipropylene glycol, ketones such as methylethylketone, isophorone and methyl or trimethylcyclohexanone (dihydroisophorone) and esters such as hexyl or heptyl acetate, methyl oleate or octyl methyl cinnamate. Mixtures of water-immiscible solvents may be used.

It will be appreciated that not all water-immiscible solvents will necessarily be suitable for every combination of adjuvant and agrochemical but those skilled in the art will readily be able to select the most appropriate water-immiscible solvent. Simple fatty alcohols such as oleyl alcohol can be encapsulated without the use of a solvent although solvents such as ketones, for example methylethylketone or cyclohexanone or mixtures thereof may conveniently be used. A non-polar solvent such as SOLVESSO 200 can be used with adjuvants that have relatively few ethoxylate groups, whereas a more polar solvent such as a ketone is appropriate in the case of a longer chain ethoxylate such as "Silwet" L77.

The composition may be microencapsulated using techniques well known in the art.

The encapsulation step is carried out by forming a polymer wall around the oil droplets containing the agrochemical and adjuvant. Preferably the polymer wall is formed by the reaction of two or more polymer precursors. Many such polymer precursors are known and suitable polymer precursors and reaction conditions can be selected by one skilled in the art to provide a polymer wall thickness and durability ranging from relatively transient polymer walls which can readily be disrupted to relatively durable polymer walls which provide slow release over a considerable period of time. Polymer precursors are also known which provide a polymer wall material that is degraded by external factors. Thus for example once an agrochemical formulation is diluted into water for application onto a target crop, the polymer wall material may be disrupted by the change in osmotic pressure within the encapsulated droplets or for example may be degraded under the action of sunlight.

A further example is the incorporation into the wall of groups that can be chemically cleaved by appropriate reagents. The incorporation of such base cleavable groups into aminoplast walls is described in WO 00/05951.

Polymer precursors generally comprise two or more components that react together to form a crosslinked polymer wall. A wide range of polymer precursors is known for use in encapsulation. Polyisocyanates which can be reacted with polyamines, with polyols or with polythiols. Polyfunctional acid chlorides which can be reacted with polyols or polyamides. Aminoplast resins, such as melamine formaldehydes and phenol formaldehydes which can be reacted with polyols or polythiols.

Depending on the solubility of the wall forming components in the oil and in water, one component can be dissolved in the oil and the other component can be dissolved in the water so that reaction between the two to form the capsule wall occurs at the interface between the two.

Alternatively, in the case where reaction between the components is relatively slow in the absence of catalyst, the components can be dissolved together in the oil before making the initial dispersion, and a water-soluble phase transfer catalyst can be added to the water to cause reaction between them to form the capsule wall at the oil droplet surface.

This type of process is illustrated by aminoplasts which can be reacted with a crosslinker such a polythiol as described for example in USP 4956129 and USP 5332584. The reaction between the two components is slow in the absence of catalyst and both components can be dissolved in the oil together. The wall-forming reaction can be initiated by adding a water-soluble phase transfer catalyst to the water. For example, an aminoplast resin, such as Beetle 80 (an etherified urea formaldehyde, trade mark of American Cyanamid) can be dissolved in the oil, together with a crosslinker, for example a polythiol such as pentaerythritol tetrakis (3-mercaptopropionate) and then a phase transfer catalyst such as an alkylnaphthalene sodium sulphonate can be added to the emulsion to cause a polymer wall to form at the oil/water interface so encapsulating the oil phase droplets.

A further type of process for by which aminoplast walls can be formed is described in WO 01/19509.

Coacervate chemistries can also be employed to good effect for these formulations. Many techniques of producing a coacervate are known. Such techniques include gelatin/gum arabic systems and the synthetic pairing effects of polymeric anionic/cationic systems.

The process described in EP 0902724 is particularly suitable for providing rapid release of the adjuvant component.

The composition of the present invention is conveniently prepared by dissolving the agrochemical and adjuvant in the solvent together with oil-soluble components used to form the microcapsule wall and thereafter forming an oil-in-water emulsion, optionally in the presence of a stabiliser such as a water-soluble polymer for example polyvinyl alcohol. A suitable microencapsulation reaction is then used to form the microcapsules. Suspending or dispersion aids may be used to suspend the microcapsules. It has been found that the type of dispersant used in the final mixture is not critical in determining the storage stability and quality of the formulation. Thus it is perfectly possible to include dispersants as suspending or dispersion aids at this stage which would interfere with the encapsulation process. Conventional additives for agrochemical formulations may also be included in the composition.

If it is desired to permit fast release of the encapsulated composition during drying of the formulation on a leaf, or similar, surface it is necessary to have thin walled microcapsules. Typically microcapsules with a mean diameter of about 2 microns require a polymer wall concentration in the formulation of about 3 % by weight. Greater quantities of polymer will slow the release rate. The diameter of the capsules and the quantity of wall forming polymer can be used to tune the performance of the capsules, depending on the required pesticide and the conditions of use.

The invention is illustrated by the following Examples in which all parts and percentages are by weight unless otherwise stated.

### EXAMPLE 1

Tralkoxydim technical powder (96.8 % w/w active component) was weighed into a beaker (0.56 g) along with the solvent methyl cyclohexanone (2.3 g). This dissolved with gentle stirring at which point oleyl alcohol (1.15 g) was added. Diphenylmethane-4,4'-diisocyanate (MDI, Suprasec 2211, Huntsman Corporation) was added (0.12 g) to create a solution that was used as the oil phase in the subsequent microencapsulation process. The oil phase was added slowly and with vigorous stirring using a high shear mixer to 3.39 g of 20 % w/w aqueous polyvinyl alcohol solution (Gohsenol GLO3, Nippon Synthetic Chemical Industry Company). When the oil phase was added the emulsion was sheared vigorously for two minutes then 0.4 g of a 10 % diethylene triamine (DETA) solution was added rapidly. The resulting microcapsule suspension was diluted with 2 g of water and had the following percentage concentrations.

| | |
|---|---|
| Tralkoxydim | 5.6 |
| methyl cyclohexanone | 22.9 |
| Oleyl alcohol | 11.5 |
| MDI | 1.2 |
| GLO3 (20 %) | 6.8 |
| DETA 10 % | 0.4 |
| Water | 51.7 |

### EXAMPLES 2 - 17

Compositions of the invention were prepared using the general method of Example 1. The active ingredient, adjuvant and solvent and proportions of wall-forming materials and other ingredients are shown in Table 1

| **Example Number** | **Agrochemical** | **Adjuvant** | **Solvent** |
|---|---|---|---|
| 2 | Azoxystrobin | "Brij" 92 | Methylcyclohexanone |
| 3 | Azoxystrobin | Oleyl alcohol | Methylcyclohexanone |
| 4 | Azoxystrobin | Crop oil Concentrate based on "Brij" 92 | Methylcyclohexanone |
| 5 | Chlorothalonil | "Turbocharge" | Aromatic 100 |
| 6 | Diuron | "Turbocharge" | Methylcyclohexanone |
| 7 | Fomesafen | "Turbocharge" | Methylcyclohexanone |
| 8 | Fomesafen | "Silwet" L77 | Methylethyl ketone |
| 9 | Fomesafen | Oleyl alcohol | Methylethyl ketone |
| 10 | Fomesafen | "Brij" 92 | Methylethyl ketone |
| 11 | Fomesafen | "Silwet" L77 | MEK/Me cyclohexanone * |
| 12 | Fomesafen | Oleyl alcohol | Methyl cyclohexanone |
| 13 | Fomesafen | "Brij" 92 | MEK/Me cyclohexanone |
| 14 | Tralkoxydim | "Brij" 92 | Methylcyclohexanone |
| 15 | Tralkoxydim | Oleyl alcohol | Methylcyclohexanone |
| 16 | Tralkoxydim | Turbocharge | Methylcyclohexanone |
| 17 | Picoxystrobin | Crop oil Concentrate based on "Brij" 92 | Methylcyclohexanone |

| | | | |
|---|---|---|---|
| *MEK/Me cyclohexanone indicates a mixture of methyl ethyl ketone and methyl hexanone. | | | |

| **Example No** | **Agrochemical %** | **Adjuvant** | **Solvent** | **MDI** | **GL03** | **DETA** | **Water** |
|---|---|---|---|---|---|---|---|
| 2 | 5% | 10% | 25% | 2.8% | 8% | 0.7% | 48.5% |
| 3 | 5% | 10% | 26% | 2.9% | 8% | 0.7% | 48.4% |
| 4 | 5% | 10% | 25% | 2.7% | 8% | 0.7% | 48.6% |
| 5 | 2% | 2% | 36% | 1.2% | 7% | 0.4% | 51.4% |
| 6 | 2% | 2% | 36% | 1.2% | 7% | 0.4% | 51.4% |
| 7 | 4% | 4% | 32% | 1.2% | 7% | 0.4% | 51.4% |
| 8 | 3% | 3% | 28% | 6% | 4% | 0.3% | 55.7% |
| 9 | 3% | 3% | 28% | 6% | 4% | 0.3% | 55.7% |
| 10 | 3% | 3% | 28% | 6% | 4% | 0.3% | 55.7% |
| 11 | 3% | 3% | 26% | 10% | 4% | 0.6% | 53.4% |
| 12 | 3% | 3% | 26% | 10% | 4% | 0.6% | 53.4% |
| 13 | 3% | 3% | 26% | 10% | 4% | 0.6% | 53.4% |
| 14 | 5% | 10% | 25% | 1.2% | 7% | 0.4% | 51.4% |
| 15 | 6% | 11% | 23% | 1.2% | 7% | 0.4% | 51.4% |
| 16 | 6% | 12% | 24% | 2.5% | 8% | 1.7% | 45.8% |
| 17 | 8% | 8% | 24% | 1.2% | 7% | 0.4% | 51.4% |

### Comparisons 1 - 5

These comparisons illustrate that microencapsulated compositions of the present invention provide stable concentrates in which the adjuvant is present in the microcapsule at concentrations that would not be stable using conventional techniques.

### Comparison 1

As a comparison to Example 3 a sample was prepared which contained oleyl alcohol in water at the same concentration as the microencapsulated sample (10 % w/w). This sample formed two clear layers. The addition of solvent and a typical emulsifier led to the formation of emulsions that were stable for short time periods however these separated after one hour and they were not found to be stable with a commercial suspension concentrate of azoxystrobin.

### Comparison 2

As a comparison to Example 2 a sample was prepared which contained "Brij" 92 in water at the same concentration as the microencapsulated sample (10 % w/w). This sample flocculated and was unusable, even where the solvent and/or a typical emulsifier were added. A non-encapsulated formulation corresponding to that shown in Example 2 was not found to be stable.

### Comparison 3

As a comparison to Example 4 a sample was prepared which contained the commercial tank mix adjuvant Turbocharge in water at the same concentration as the microencapsulated sample (10 % w/w). This sample creamed after a period of one hour. An attempt was made to resolve this problem using the solvent and/or a typical emulsifier however long term stability was not achieved indicating that the formulation task was not straightforward. A non-encapsulated formulation corresponding to that shown in Example 4 was not found to be stable.

### Comparison 4

As a comparison to Example 9 a sample was prepared which contained oleyl alcohol in water at the same concentration as the microencapsulated sample (3 % w/w). This sample formed two distinct clear layers however it was possible to form an emulsion of the oil in water by the addition of Synperonic NP8. This emulsion was not stable over periods of one hour or longer. The addition of the solvent and/or the pesticide (fomesafen) did not help with the long term stability problem.

### Comparison 5

As a comparison to Example 10 a sample was prepared which contained Brij 92 in water at the same concentration as the microencapsulated sample (3 % w/w). This sample flocculated and was unusable, even where the solvent and/or a typical emulsifier was added. A non-encapsulated formulation corresponding to that shown in Example 10 was not stable over a period of one hour.

## Claims

1. A microencapsulated agrochemical composition comprising an aqueous dispersion of microcapsules having material encapsulated therein wherein the microcapsules have a mean diameter of about 2 microns and a total polymer wall concentration of about 3% by weight of the total composition and wherein the material encapsulated within the microcapsules comprises (a) an agrochemical (b) a water-insoluble, bioperformance-enhancing adjuvant for said agrochemical wherein said adjuvant is of formula (I)
R-X (I)
and alkoxylated derivatives thereof wherein R is a branched or straight chain alkyl or akenyl group having from 12 to 20 carbon atoms and X is hydroxy; primary, secondary, tertiary or quaternary amine; amine oxide; phosphonate; phosphate; phosphate ester; thiol; sulphoxide; sulphone; sulphonate; sulphate; a heterocyclic moiety; glucoside; polyglucoside or alkylated glucoside; sarcosinate; betaine; amidoamine; carboxylic acid; amide; ester; ether sulphate; ether amine; ether carboxylate; or ether phosphonate and (c) a water-immiscible solvent in which both the agrochemical and adjuvant are soluble and wherein the ratio of adjuvant to the agrochemical is from 1:50 to 200:1.

2. A composition as claimed in claim 1 wherein the group X is alkoxylated provided the HLB of the adjuvant is not greater than 9.

3. A composition as claimed in claim 2 wherein the alkoxy group contains from 2 to 4 carbon atoms.

4. A composition as claimed in claim 3 having an average of 1 to 2 ethoxy groups per adjuvant molecule or from 1 to 20 propoxy or butoxy groups per adjuvant molecule.

5. A composition as claimed in any of claims 1 to 4 wherein R is an optionally alkoxylated branched or straight chain alkyl or alkenyl group containing from 16 to 20 carbon atoms.

6. A composition as claimed in claim 5 wherein R is an optionally alkoxylated C₁₈ branched chain alkyl or C₁₈ alkenyl group.

7. A composition as claimed in claim 6 wherein R is optionally alkoxylated oleyl or isostearyl.

8. A composition according to any of the preceding claims wherein the ratio of adjuvant to the agrochemical is from 1:5 to 20:1.

9. A composition as claimed in any of the preceding claims wherein the agrochemical is a lipophilic agrochemical.

10. A composition as claimed in any of the preceding claims wherein the water-immiscible solvent is diesel oil; isoparaffin; xylene; a propyl benzene fraction; a mixed naphthalene and alkyl naphthalene fraction; a mineral oil; white oil; castor oil; sunflower oil; kerosene; a dimethyl amide of caprylic acid; a chlorinated aliphatic or aromatic hydrocarbon; the acetate of the n-butyl, ethyl or methyl ether of diethylene glycol; the acetate of the methyl ether of dipropylene glycol; methylethylketone; isophorone; methyl or trimethylcyclohexanone (dihydroisophorone); hexyl or heptyl acetate; methyl oleate; or octyl methyl cinnamate; or mixtures of two or more thereof.

11. A composition as claimed in any of the preceding claims wherein the adjuvant is of formula (II)
R₁-(CO)ₘ-O-[-R₂O-]ₙ-R₃ (II)
wherein R₁ is a C₁₆ to C₂₀ straight or branched chain alkyl or alkenyl group, R₂ is ethyl or isopropyl, n is from 8 to 30 and m is 0 or I; and when R₂ is ethyl, R₃ is a C₁ to C₇ alkyl group; and when R₂ is isopropyl, R₃ is hydrogen or a C₁ to C₇ alkyl group.

## Patentansprüche

1. Mikroverkapselte agrochemische Zusammensetzung, umfassend eine wässrige Dispersion von Mikrokapseln mit darin verkapseltem Material, worin die Mikrokapseln einen durchschnittlichen Durchmesser von etwa 2 µm und eine Gesamtkonzentration der Polymerwand von etwa 3 Gew.% der Gesamtzusammensetzung aufweisen und worin das in den Mikrokapseln verkapselte Material (a) eine Agrochemikalie, (b) ein Wasser-unlösliches, Bioleistung-steigerndes Adjuvans für die Agrochemikalie, worin das Adjuvans eines der Formel (I)
R-X (I)
und alkoxylierten Derivaten davon ist, worin R eine verzweigte oder geradkettige Alkyl- oder Alkenyl-Gruppe mit von 12 bis 20 Kohlenstoffatomen ist und X Hydroxy; primäres, sekundäres, tertiäres oder quaternäres Amin; Aminoxid; Phosphonat; Phosphat; Phosphatester; Thiol; Sulfoxid; Sulfon; Sulfonat; Sulfat; ein heterocyclischer Rest; Glucosid; Polyglucosid oder alkyliertes Glucosid; Sarcosinat; Betain; Amidoamin; Carbonsäure; Amid; Ester; Ethersulfat; Etheramin; Ethercarboxylat oder Etherphosphonat ist; und (c) ein Wasser-unvermischbares Lösungsmittel, in dem sowohl die Agrochemikalie als auch das Adjuvans löslich sind, umfasst, und worin das Verhältnis von Adjuvans zu der Agrochemikalie von 1:50 bis 200:1 ist.

2. Zusammensetzung gemäß Anspruch 1, worin die Gruppe X alkoxyliert ist, mit der Maßgabe, dass der HLB-Wert des Adjuvans nicht größer als 9 ist.

3. Zusammensetzung gemäß Anspruch 2, worin die Alkoxygruppe von 2 bis 4 Kohlenstoffatome enthält.

4. Zusammensetzung gemäß Anspruch 3, die durchschnittlich von 1 bis 2 Ethoxy-Gruppen pro Adjuvansmolekül oder von 1 bis 20 Propoxy- oder Butoxy-Gruppen pro Adjuvansmolekül aufweist.

5. Zusammensetzung gemäß irgendeinem der Ansprüche 1 bis 4, worin R eine gegebenenfalls alkoxylierte, verzweigte oder geradkettige Alkyl- oder Alkenyl-Gruppe ist, die von 16 bis 20 Kohlenstoffatome enthält.

6. Zusammensetzung gemäß Anspruch 5, worin R eine gegebenenfalls alkoxylierte, verzweigte C₁₈-Alkyl- oder C₁₈-Alkenyl-Gruppe ist.

7. Zusammensetzung gemäß Anspruch 6, worin R ein gegebenenfalls alkoxyliertes Oleyl oder Isostearyl ist.

8. Zusammensetzung gemäß irgendeinem der vorangehenden Ansprüche, worin das Verhältnis von Adjuvans zu der Agrochemikalie von 1:5 bis 20:1 ist.

9. Zusammensetzung gemäß irgendeinem der vorangehenden Ansprüche, worin die Agrochemikalie eine lipophile Agrochemikalie ist.

10. Zusammensetzung gemäß irgendeinem der vorangehenden Ansprüche, worin das Wasser-unvermischbare Lösungsmittel Dieselöl; Isoparaffin; Xylol; eine Propylbenzol-Fraktion; eine gemischte Naphthalin- und Alkylnaphthalin-Fraktion; ein Mineralöl; weißes Öl, Castoröl; Sonnenblumenöl; Kerosin; ein Dimethylamid von Caprylsäure; ein chloriniertes aliphatisches oder aromatischen Kohlenwasserstoff; das Acetat von n-Butyl-, Ethyl- oder Methylether von Diethylenglykol; das Acetat von Methylether von Dipropylenglykol; Methylethylketon; Isophoron; Methyl- oder Trimethylcyclohexanon (Dihydroisophoron); Hexyl- oder Heptylacetat; Methyloleat; oder Octylmethylcinnamat; oder Gemische von zwei oder mehreren davon ist.

11. Zusammensetzung gemäß irgendeinem der vorangehenden Ansprüche, worin das Adjuvans eines der Formel (II)
R₁-(CO)ₘ-O-[-R₂O-]ₙ-R₃ (II)
ist, worin R₁ eine geradkettige oder verzweigte C₁₆- bis C₂₀-Alkyl- oder -Alkenyl-Gruppe ist, R₂ Ethyl oder Isopropyl ist, n von 8 bis 30 ist und m 0 oder 1 ist; und, wenn R₂ Ethyl ist, R₃ eine C₁- bis C₇-Alkyl-Gruppe ist; und, wenn R₂ Isopropyl ist, R₃ Wasserstoff oder eine C₁-bis C₇-Alkyl-Gruppe ist.

## Revendications

1. Composition agrochimique microencapsulée comprenant une dispersion aqueuse de microcapsules encapsulant un matériau, dans laquelle les microcapsules ont un diamètre moyen d'environ 2 microns et une concentration en polymère de paroi totale d'environ 3 % en poids de la composition totale et dans laquelle le matériau encapsulé dans les microcapsules comprend (a) un produit agrochimique, (b) un adjuvant insoluble dans l'eau améliorant la bioperformance dudit produit agrochimique, ledit adjuvant répondant à la formule (I)
R-X (I)
et ses dérivés alcoxylés, dans laquelle R est un groupe alkyle ou alcényle à chaîne droite ou ramifiée comportant de 12 à 20 atomes de carbone et X est un groupe hydroxy ; une amine primaire, secondaire, tertiaire ou quaternaire ; un oxyde d'amine ; un phosphonate ; un phosphate ; un ester de phosphate ; un thiol ; un sulfoxyde ; une sulfone ; un sulfonate ; un sulfate ; un motif hétérocyclique ; un glucoside ; un polyglucoside ou glucoside alkylé ; un sarcosinate ; une bétaïne ; une amidoamine ; un acide carboxylique ; un amide ; un ester ; un éther sulfate ; un éther amine ; un éther carboxylate ou un éther phosphonate et (c) un solvant immiscible à l'eau dans lequel le produit agrochimique et l'adjuvant sont tous deux solubles et dans lequel le rapport entre l'adjuvant et le produit agrochimique vaut de 1 : 50 à 200 : 1.

2. Composition selon la revendication 1, dans laquelle le groupe X est alcoxylé à condition que l'indice HLB de l'adjuvant ne soit pas supérieur à 9.

3. Composition selon la revendication 2, dans laquelle le groupe alcoxy contient de 2 à 4 atomes de carbone.

4. Composition selon la revendication 3, comportant en moyenne de 1 à 2 groupes éthoxy par molécule d'adjuvant ou de 1 à 20 groupes propoxy ou butoxy par molécule d'adjuvant.

5. Composition selon l'une quelconque des revendications 1 à 4, dans laquelle R est un groupe alkyle ou alcényle à chaîne droite ou ramifiée facultativement alcoxylé contenant de 16 à 20 atomes de carbone.

6. Composition selon la revendication 5, dans laquelle R est un groupe alkyle à chaîne ramifiée en C₁₈ ou alcényle en C₁₈ facultativement alcoxylé.

7. Composition selon la revendication 6, dans laquelle R est un groupe oléyle ou isostéaryle facultativement alcoxylé.

8. Composition selon l'une quelconque des revendications précédentes, dans laquelle le rapport entre l'adjuvant et le produit agrochimique vaut de 1 : 5 à 20 : 1.

9. Composition selon l'une quelconque des revendications précédentes, dans laquelle le produit agrochimique est un produit agrochimique lipophile.

10. Composition selon l'une quelconque des revendications précédentes, dans laquelle le solvant immiscible à l'eau est une huile diesel ; l'iso-paraffine ; un xylène ; une fraction de propyl benzène ; une fraction de naphtalène et alkyl-naphtalène mixte ; une huile minérale ; une huile blanche ; l'huile de ricin ; l'huile de tournesol ; le kérosène ; le diméthylamide d'acide caprylique ; un hydrocarbure aliphatique ou aromatique chloré ; l'acétate du n-butyl, éthyl ou méthyl éther du diéthylène glycol ; l'acétate du méthyl éther du dipropylène glycol ; la méthyl éthyl cétone ; l'isophorone ; la méthyl ou triméthylcyclohexanone (dihydroisophorone) ; l'acétate d'hexyle ou d'heptyle ; l'oléate de méthyle ; le cinnamate d'octyl méthyle ; ou des mélanges de deux de ces éléments ou plus.

11. Composition selon l'une quelconque des revendications précédentes, dans laquelle l'adjuvant répond à la formule (II)
R₁-(CO)ₘ-O-[-R₂O-]ₙ-R₃ (II)
dans laquelle R₁ est un groupe alkyle ou alcényle à chaîne droite ou ramifiée en C₁₆ à C₂₀, R₂ est un groupe éthyle ou isopropyle, n vaut de 8 à 30 et m vaut 0 ou 1 ; et lorsque R₂ est un groupe éthyle, R₃ est un groupe alkyle en C₁ à C₇ ; et lorsque R₂ est un groupe isopropyle, R₃ est un atome d'hydrogène ou un groupe alkyle en C₁ à C₇.
